# EUROPEAN PATENT APPLICATION

(11) **EP 4 443 932 A1**
(43) Date of publication of application: **09.10.2024**
(21) Application number: 22900390.0
(22) Date of filing: 25.11.2022
(51) Int. Cl.: H04W 24/02, H04L 41/0813

(54) **INFORMATION INTERACTION METHOD AND APPARATUS, AND COMMUNICATION DEVICE**

(30) Priority: 30.11.2021 CN 202111447307
(71) Applicant: VIVO MOBILE COMMUNICATION CO., LTD., Dongguan, Guangdong 523863 (CN)
(72) Inventor: SUN, Peng, Dongguan, Guangdong 523863 (CN)
(74) Representative: Lavoix
(86) International application number: PCT/CN2022/134308
(87) International publication number: WO 2023/098586

(57) **Abstract**

This application discloses an information interaction method and apparatus and a communication device, pertaining to the field of communication technologies. The information interaction method in an embodiment of this application includes: obtaining, by a first communication device, information about a target algorithm, where the target algorithm includes at least one of a neural network algorithm, an artificial intelligence algorithm, and a machine learning algorithm; and performing, by the first communication device, information interaction with at least one target communication device based on the information about the target algorithm.

## Description

### CROSS-REFERENCE TO RELATED APPLICATIONS

This application claims priority to Chinese Patent Application No. 202111447307.2, filed in China on Tuesday, November 30, 2021, which is incorporated herein by reference in its entirety.

### TECHNICAL FIELD

This application pertains to the field of communication technologies and specifically relates to an information interaction method and apparatus and a communication device.

### BACKGROUND

When artificial intelligence (Artificial Intelligence, AI) is applied in wireless communication systems, it is necessary to run a corresponding neural network on the terminal. However, the network-side nodes do not understand the neural network computing power of the terminal, the time when the terminal is to run the neural network, or the like. As a result, it is difficult to configure a neural network for the terminal that matches the terminal's operational resources, making it challenging for the neural network model used by the terminal to match the terminal's operational resources.

### SUMMARY

Embodiments of this application provide an information interaction method and apparatus and a communication device, able to solve the problem of ensuring that a neural network model used by a terminal is adapted to the terminal's operational resources.

According to a first aspect, an information interaction method is provided, including:
obtaining, by a first communication device, information about a target algorithm, where the target algorithm includes at least one of a neural network algorithm, an artificial intelligence algorithm, and a machine learning algorithm; and performing information interaction with at least one target communication device based on the information about the target algorithm.

According to a second aspect, an information interaction method is provided, including:
sending, by a second communication device, information about a target algorithm to a first communication device, where the target algorithm includes at least one of a neural network algorithm, an artificial intelligence algorithm, and a machine learning algorithm; and performing, by the second communication device, information interaction with a target communication device, where the target communication device includes at least one of the first communication device and a third communication device.

According to a third aspect, an information interaction method is provided, including:
obtaining, by a third communication device, first interaction information sent by a target communication device, where the first interaction information includes at least one of first processing resource information and target algorithm recommendation information, the first processing resource information is used to indicate resource information for a first communication device to run the target algorithm, and the target communication device includes at least one of a second communication device and the first communication device; and
interacting, by the third communication device, with the target communication device based on the first interaction information.

According to a fourth aspect, an information interaction apparatus is provided, including:
a first transceiver module, configured to obtain information about a target algorithm, where the target algorithm includes at least one of a neural network algorithm, an artificial intelligence algorithm, and a machine learning algorithm; and
a first interaction module, configured to perform information interaction with at least one target communication device based on the information about the target algorithm.

According to a fifth aspect, an information interaction apparatus is provided, including:
a second transceiver module, configured to send information about a target algorithm to a first communication device, where the target algorithm includes at least one of a neural network algorithm, an artificial intelligence algorithm, and a machine learning algorithm; and
a second interaction module, configured to perform information interaction with a target communication device based on the information about the target algorithm, where the target communication device includes at least one of the first communication device and a third communication device.

According to a sixth aspect, an information interaction apparatus is provided, including:
a first obtaining module, configured to obtain first interaction information sent by a target communication device, where the first interaction information includes at least one of first processing resource information and target algorithm recommendation information, the first processing resource information is used to indicate resource information for a first communication device to run the target algorithm, and the target communication device includes at least one of a second communication device and the first communication device; and
a third interaction module, configured to interact with the target communication device based on the first interaction information.

According to a seventh aspect, a communication device is provided. The communication device includes a processor and a memory. The memory stores a program or instructions capable of running on the processor. When the program or instructions are executed by the processor, the steps of the method according to the first, second, or third aspect are implemented.

According to an eighth aspect, a communication device is provided, including a processor and a communication interface. The communication interface is configured to obtain information about a target algorithm, where the target algorithm includes at least one of a neural network algorithm, an artificial intelligence algorithm, and a machine learning algorithm; and perform information interaction with at least one target communication device based on the information about the target algorithm; or configured to send information about a target algorithm to a first communication device, where the target algorithm includes at least one of a neural network algorithm, an artificial intelligence algorithm, and a machine learning algorithm; and perform information interaction with a target communication device based on the information about the target algorithm, where the target communication device includes at least one of the first communication device and a third communication device; or configure to obtain first interaction information sent by a target communication device, where the first interaction information includes at least one of first processing resource information and target algorithm recommendation information, the first processing resource information is used to indicate resource information for a first communication device to run the target algorithm, and the target communication device includes at least one of a second communication device and the first communication device; and interact with the target communication device based on the first interaction information.

According to a ninth aspect, a communication device is provided, including a first communication device, a second communication device, and a third communication device, where the first communication device is configured to execute the steps of the information interaction method according to the first aspect, the second communication device is configured to execute the steps of the information interaction method according to the second aspect, and the third communication device is configured to execute the steps of the information interaction method according to the third aspect.

According to a tenth aspect, a readable storage medium is provided, where the readable storage medium stores a program or instructions, and when the program or instructions are executed by a processor, the steps of the method according to the first, second, or third aspect are implemented.

According to an eleventh aspect, a chip is provided, where the chip includes a processor and a communication interface, the communication interface is coupled to the processor, and the processor is configured to run a program or instructions to implement the method according to the first, second or third aspect.

According to a twelfth aspect, a computer program or program product is provided, where the computer program or program product is stored in a storage medium, and the computer program or program product is executed by at least one processor so as to implement the method according to the first, second or third aspect.

According to a thirteenth aspect, a communication device is provided, configured to execute the steps of the method according to the first, second, or third aspect.

In the embodiments of this application, the first communication device obtains information about a target algorithm, where the target algorithm includes at least one of a neural network algorithm, an artificial intelligence algorithm, and a machine learning algorithm. The first communication device performs information interaction with at least one communication device based on the information about the target algorithm to determine the target algorithm to be used by the first communication device, such as the target neural network model to be used by the first communication device, thereby achieving the purpose of the neural network model used by the first communication device being a neural network model adapted to its resource capabilities.

### BRIEF DESCRIPTION OF DRAWINGS

FIG. 1 is a structural diagram of a communication system to which the embodiments of this application can be applied;
FIG. 2 is a first schematic flowchart of an information interaction method according to an embodiment of this application;
FIG. 3 is a second schematic flowchart of an information interaction method according to an embodiment of this application;
FIG. 4 is a third schematic flowchart of an information interaction method according to an embodiment of this application;
FIG. 5 is a first schematic modular diagram of an information interaction apparatus according to an embodiment of this application;
FIG. 6 is a first structural block diagram of a communication device according to an embodiment of this application;
FIG. 7 is a second structural block diagram of a communication device according to an embodiment of this application;
FIG. 8 is a second schematic modular diagram of an information interaction apparatus according to an embodiment of this application;
FIG. 9 is a third schematic modular diagram of an information interaction apparatus according to an embodiment of this application;
FIG. 10 is a first structural block diagram of a network-side device according to an embodiment of this application; and
FIG. 11 is a second structural block diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than the NR system application, for example, to the 6th generation (6th Generation, 6G) communication system.

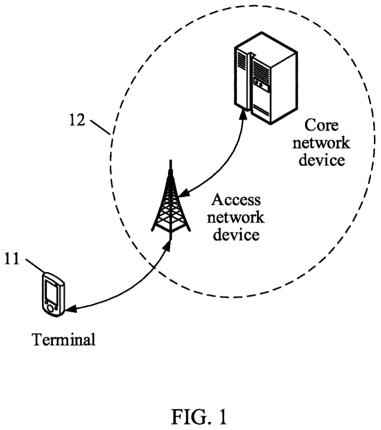

FIG. 1 is a block diagram of a wireless communication system to which the embodiments of this application are applicable. The wireless communication system includes a terminal 11 and a network-side device 12. The terminal 11 can be a mobile phone, tablet personal computer (Tablet Personal Computer, TPC), laptop computer (Laptop Computer, LC) also known as a notebook computer, personal digital assistant (Personal Digital Assistant, PDA), palmtop computer, netbook, ultra-mobile personal computer (Ultra-Mobile Personal Computer, UMPC), mobile internet device (Mobile Internet Device, MID), augmented reality (Augmented Reality, AR)/virtual reality (Virtual Reality, VR) device, robots, wearable device (Wearable Device, WD), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the specific type of the terminal 11 is not limited in the embodiments of this application. The network-side device 12 can include an access network device or core network device, where the access network device 12 can also be referred to as a radio access network device, radio access network (Radio Access Network, RAN), radio access network function, or radio access network unit. The access network device 12 can include base stations, wireless local area network (Wireless Local Area Networks, WLAN) access points, wireless fidelity (Wireless Fidelity, WiFi) nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, L-NEF), binding support function (Binding Support Function, BSF), application function (Application Function, AF), and the like. It should be noted that in the embodiments of this application, only the core network device in the NR system is introduced as an example, and the specific type of the core network device is not limited.

The following describes in detail the information interaction method provided in the embodiments of this application through some embodiments and application scenarios thereof with reference to the accompanying drawings.

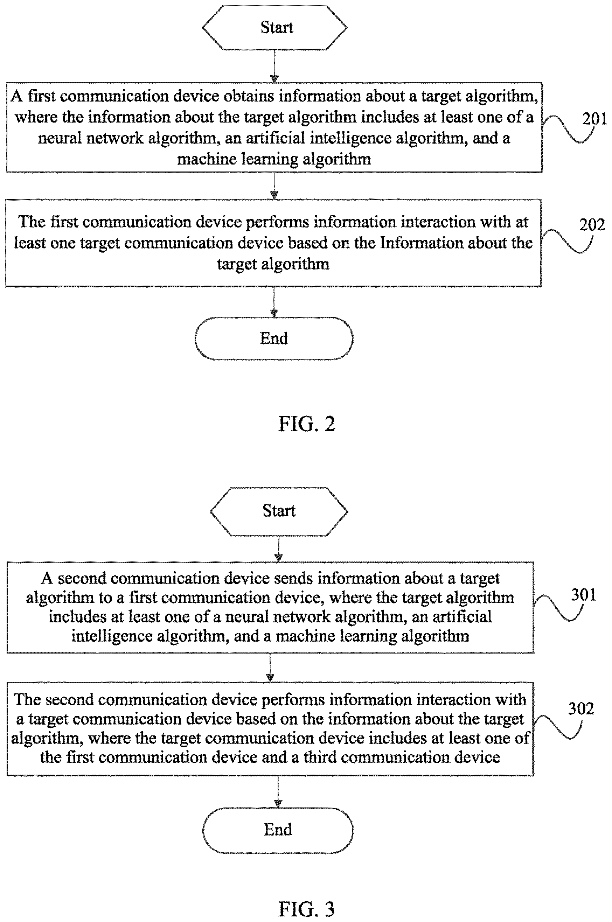

As shown in FIG. 2, the embodiments of this application provide an information interaction method, which includes the following steps.

Step 201: A first communication device obtains information about a target algorithm, where the target algorithm includes at least one of a neural network algorithm, an artificial intelligence algorithm, and a machine learning algorithm.

The information about the target algorithm is obtained according to a pre-agreed method, or the information about the target algorithm is configured by at least one of the communication devices. The target algorithm can specifically include a training algorithm, an inference algorithm, or the like.

Optionally, the information about the target algorithm includes at least one of the following:
an activation function type required by the target algorithm;
an operation type required by the target algorithm;
an available resource conversion relationship used between different operations as required by the target algorithm;
supporting different specific operations or supercomputing operations within one timing unit as required by the target algorithm;
a combinational relationship between different specific operations as required by the target algorithm;
the number of operation executions supported within a first target time as required by the target algorithm, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required by the target algorithm to complete a specific operation for a specific target;
supercomputing information required by the target algorithm;
neural network model information required by the target algorithm;
a model size;
a quantized bit number of a target algorithm model;
the number of layers of the model;
a maximum number of neurons in each layer of the model;
running time of each neural network algorithm required by the target algorithm;
running time of a combination of a plurality of neural network algorithms as required by the target algorithm;
time needed for the target algorithm as required by the target algorithm;
a target parameter of the target algorithm as required by the target algorithm;
at least one expected time for running the target algorithm;
an input type of the target algorithm;
preprocessing information corresponding to the input information of the target algorithm;
different target parameters corresponding to neural network models under a same type of target algorithm; and
a neural network model library, where the neural network model library may include at least one neural network model.

Optionally, the target parameter includes at least one of the following:
activation function;
number of layers;
number of neurons;
number of neurons per layer;
connection relationship among neurons; and
running time of the target algorithm.

Step 202: The first communication device performs information interaction with at least one target communication device based on the information about the target algorithm.

In the embodiments of this application, performing information interaction can include receiving information and/or sending information.

In the embodiments of this application, the first communication device obtains information about a target algorithm, where the target algorithm includes at least one of a neural network algorithm, an artificial intelligence algorithm, and a machine learning algorithm. The first communication device performs information interaction with at least one communication device based on the information about the target algorithm to determine the target algorithm to be used by the first communication device, such as the target neural network model to be used by the first communication device, thereby achieving the purpose of the neural network model used by the first communication device being a neural network model adapted to its resource capabilities.

Optionally, the first communication device performing information interaction with at least one communication device includes:
sending, by the first communication device, first interaction information to the at least one communication device based on the information about the target algorithm, where the first interaction information includes at least one of first processing resource information and target algorithm recommendation information, and the first processing resource information is used to indicate resource information for the first communication device to run the target algorithm.

In an embodiment of this application, after obtaining the above information about a target algorithm, the first communication device sends the first interaction information to a second communication device based on the algorithm information. The second communication device further determines the neural network model to be used by the first communication device based on the first interaction information. Thus, through the interaction between the first communication device and the second communication device, the purpose of configuring a neural network model adapted to the neural network running capabilities of the first communication device is achieved.

Optionally, the first communication device performing information interaction with at least one communication device includes:
obtaining, by the first communication device, at least one of first indication information and second indication information from the at least one target communication device, where the second indication information is used to indicate a target algorithm to be used by the first communication device; and
the first indication information includes at least one of the following:
   indication information of a running priority of the target algorithm;
   time from configuration to activation of a neural network model;
   time required for switching between at least two neural network models; and
   whether a corresponding operation is runnable during a switching process between at least two neural network models.

Optionally, the first communication device obtaining information about a target algorithm includes:
obtaining the information about the target algorithm based on at least one of first indication information and second indication information, where the second indication information is used to indicate a target algorithm to be used by the first communication device; and
the first indication information includes at least one of the following:
   indication information of a running priority of the target algorithm;
   time from configuration to activation of a neural network model;
   time required for switching between at least two neural network models; and
   whether a corresponding operation is runnable during a switching process between at least two neural network models.

Optionally, the first interaction information further includes at least one of the following:
indication information of a running priority of the target algorithm, where the running priority of the target algorithm can be pre-agreed or indicated by the first communication device or configured by another communication device; for example, in the case of a plurality of different neural network models, how to prioritize processing when resources are valid;
time from configuration to activation of a neural network model;
time required for switching between at least two neural network models; and
whether a corresponding operation is runnable during a switching process between at least two neural network models.

Optionally, the first processing resource information includes at least one of the following:
an activation function type supported by the first communication device, where the activation function type includes but is not limited to at least one of sigmoid (Sigmoid) function, tanh (Tanh) function, rectified linear unit (Rectified Linear Unit, ReLU), leaky ReLU (Leaky-ReLU, LReLU) function, ELU function, Gaussian error linear units (Gaussian Error Linear Units, GELU) function, and softmax (Softmax) function;
an operation type supported by the first communication device;
an available resource conversion relationship used between different operations as supported by the first communication device;
whether the first communication device supports different specific operations or supercomputing operations within one timing unit;
a combinational relationship between different specific operations as supported by the first communication device;
the number of operation executions supported by the first communication device within a first target time, where the first target time includes at least one timing unit; optionally, the timing unit is measured by at least one of a time unit, subcarrier spacing, slot, and frame, where the time unit can be millisecond (ms), second (s), or the like; for example, the number of operation executions supported within 1 ms or 10 ms or within a preset time set;
a relationship between the number of operation executions supported within the first target time and the number of operation executions supported within a second target time, where the second target time includes at least one timing unit, and the timing unit(s) contained in the second target time are different from timing unit(s) contained in the first target time; for example, the number of operation executions supported within the first target time is N times the number of operation executions supported within the second target time, where N is calculated based on the relationship between the length of the first target time and the length of the second target time; if N includes a plurality of values (assuming the first target time includes timing units corresponding to a plurality of time granularities), then a value can be determined according to a predefined rule based on the plurality of values, such as choosing the minimum value, maximum value, or average value;
time required by the first communication device to complete a specific operation for a specific target, where the specific target includes a target number that can be agreed upon by protocol or configured by the network. The specific operation can be one type of operation, and in reporting, the reported can be the time required to complete at least one type of operation for the complete specific target, or only the time required to complete at least one type of operation for the specific target, or the time required to complete different types of operations for the specific target separately; or the specific operation can be a combination of a plurality of types of operations, and in reporting, the reported can be the time required to complete at least one operation combination for the specific target, or the time required to complete each operation combination for the specific target separately. In addition, the time required by the first communication device to complete a specific operation for a specific target can be determined according to a preset conversion rule. For example, it can be converted according to the number of operation executions. Assuming that the time required by the first communication device to complete a preset operation for the specific target is T0, and the time required to complete a specific operation A is M1 times T0, then the first communication device can report the time required to complete the specific operation A as M1 times T0. For another example, the specific operation is an operation combination, and the time required by the first communication device to complete a specific operation combination (including operation A1 and operation A2) for a specific target is T1, the time required to complete the specific operation A1 is M2 times T0, and the time required to complete the specific operation A2 is M3 times T0, then based on the smaller or larger value of M2 and M3, T1 can be converted to T0; for example, if M2 is smaller than M3, then T1 is converted to M2 times T0. For still another example, the specific operation includes a plurality of operation combinations. Assuming it includes operation combination 1 and operation combination 2, where the time required to complete operation combination 1 is M4 times T0, and the time required to complete operation combination 2 is M5 times T0, then the smaller or larger value of M4 and M5 can be selected for converting the time required to complete the plurality of operation combinations to a preset multiple of T0;
supercomputing information supported by the first communication device, where the supercomputing information includes a supercomputing type and parameters corresponding to the supercomputing type. For example, the supercomputing type is a specific type of operation combination, such as convolution operation, and its corresponding parameters include kernel size and the computing capability corresponding to supercomputing, where the computing capability includes the time required to complete a specific supercomputing operation or the number of supercomputing operations completed per unit time;
neural network model information supported by the first communication device, where the neural network model information includes a neural network type and parameters corresponding to the neural network type. The neural network type can be convolutional neural network (Convolutional Neural Networks, CNN), transformer, multilayer perceptron (Multilayer Perceptron, MLP)-Mixer, or the like. The parameters corresponding to the neural network type include but are not limited to the number of supported layers, maximum number of neurons per layer, and number of times a specific neural network inference is completed within a unit time;
a model size, where the model size is used to indicate the scale of the neural network model, for example, it can be indicated by the volume of model parameters. The larger the volume of model parameters, the larger the scale of the neural network model;
a quantized bit number of the target algorithm model, for example, the quantized bit number of model parameters;
the number of layers of the model;
a maximum number of neurons in each layer of the model;
running time of each neural network algorithm;
running time of a combination of a plurality of neural network algorithms;
a target algorithm supported or not supported by the first communication device;
whether the first communication device supports the target algorithm according to a predefined timing;
time required by the first communication device to run the target algorithm;
expected time corresponding to running the target algorithm by the first communication device; and
a target parameter of the target algorithm supported by the first communication device.

The above number of operation executions can refer to the number of operation executions for a first target operation, where the first target operation includes at least one of the following types:
multiplication operation;
addition operation; and
operations corresponding to nonlinear activation functions.

The operations corresponding to nonlinear activation functions can be classified as one type of operation, and the first communication device can report the total number of operation executions corresponding to that type of operation to the second communication device. The operations corresponding to the above nonlinear activation functions can also be classified into a plurality of types of operations. For example, the number of operation executions corresponding to each type of nonlinear activation function can be reported separately. The operations corresponding to the above nonlinear activation functions can also be further divided into several subclasses, and the number of operation executions corresponding to each subclass can be reported.

Specifically, the expected time corresponding to running the target algorithm by the first communication device includes the expected time for the first communication device to run the neural network model. Other communication devices apart from the first communication device can configure the expected time for each neural network model to execute, and the first communication device indicates whether it supports that expected time, or alternatively, other communication devices configure a plurality of expected times for the first communication device to execute the neural network, and the first communication device indicates which expected time it supports.

Additionally, other communication devices also configure the input type of the neural network and the preprocessing required for the input information.

The expected time may or may not include the time required for preprocessing. In the embodiments of this application, it can be agreed in advance or indicated through interaction whether the expected time includes the time required for preprocessing.

Optionally, the number of operation executions supported by the first communication device within a first target time includes at least one of the following:
the number of operation executions for each type of operation executed within the first target time, for example, the number of operation executions corresponding to each type of a plurality of nonlinear activation function operations;
the number of operation executions for at least two types of operations that are executed simultaneously within the first target time. The combination of at least two types of operations can be indicated by the first communication device, configured by the second communication device, or pre-agreed upon. The terminal can report the corresponding number of operation executions for each operation combination, or it can report the corresponding number of operation executions for a plurality of operation combinations at the same time, or the terminal can report the number of operation executions for each operation in the operation combination separately, or it can add up the number of operation executions for each operation in the operation combination and then report the addition result, or it can convert the number of operation executions corresponding to at least two combinations of operations in the operation combinations into the number of operation executions corresponding to a preset operation for reporting. For example, if the operation combination includes operation A and operation B, the number of operation executions that can be completed for operation A during the first target time is N1, and the number of operation executions that can be completed for operation B during the first target time is N2, assuming the number of operation executions that can be completed for the preset operation during the first target time is N0, then based on the conversion ratio, both N1 and N2 are converted into a target multiple of N0, and then reporting is performed based on the converted number of operation executions. Certainly, N1 can be converted into a certain multiple of N2, or N2 can be converted into a certain multiple of N1; and
a total number of operation executions within the first target time, where the total number of operation executions can be a result of adding the numbers of operation executions corresponding to various operations within the first target time, or get the total number of operation executions can be obtained by converting the numbers of operation executions corresponding to various operations based on the conversion information between the numbers of operation executions corresponding to various operations and the preset number of operation executions corresponding to the preset operation, and then adding the converted numbers of operation executions. The specific conversion method has been described in the above content and is not repeated here. The operations corresponding to the total number of operation executions may be any combination of arbitrary operations or any operation combination within a predefined operation set.

Optionally, the timing unit is measured by a time unit, subcarrier spacing, slot, or frame.

Optionally, the target algorithm recommendation information includes at least one of the following:
recommendation information of the first communication device for target parameters of the target algorithm;
revision information of the first communication device for target parameters of the target algorithm; and
information about whether the first communication device supports the target algorithm.

Optionally, the first processing resource information further includes at least one of the following:
recommendation information of the first communication device for target parameters of the target algorithm;
support information of the first communication device for a pre-agreed target algorithm.

Optionally, the target parameter includes at least one of the following:
activation function;
number of layers;
number of neurons;
number of neurons per layer;
connection relationship among neurons; and
running time of the target algorithm, such as running time of the neural network model.

In the embodiments of this application, other communication devices can configure a plurality of different options of the same neural network type for the first communication device (these options can also be described as the aforementioned target parameters), for example, configure neural network models of a same type corresponding to different activation functions, or configure neural network models of a same type corresponding to different processing capability requirements, or configure neural network models of a same type corresponding to different numbers of layers, or configure neural network models of a same type corresponding to different numbers of neurons, or configure neural network models of a same type corresponding to different neuron connection relationships. The first communication device indicates to the second communication device the activation functions, numbers of layers, number of neurons, numbers of neurons per layer, neuron connection relationships, and the like that the first communication device supports for the neural network models of the same type. In addition, the neural network model recommendation information further includes a suggestion for the running time of the neural network model and whether the corresponding running time is supported.

Optionally, the allowable revision information for the target parameters can be determined through agreement or information interaction. For example, the number of layers is allowed to be modified to C1 or C2.

In a specific embodiment of this application, the first communication device sends first processing resource information to a second communication device, and the second communication device configures neural network model information based on the first processing resource information. The first communication device further indicates to the second communication device whether it supports the neural network model or provides corresponding recommendation information. The second communication device further configures the neural network model, and the first communication device can give a further indication. Thus, through a plurality of rounds of interaction, the final neural network model to be used is determined.

Optionally, the first communication device performing information interaction with at least one communication device includes:
determining a target algorithm to be used by the first communication device based on the information about the target algorithm; and
sending the target algorithm to be used by the first communication device to the at least one target communication device.

Here, after obtaining the information about the target algorithm, the first communication device can select the target algorithm to be used by the first communication device based on the configuration information and notify the target algorithm to other communication devices, so that the other communication devices can refer to that target algorithm when subsequently configuring a target algorithm for the first communication device.

Optionally, the method of the embodiments of this application further includes:
in a case that a pre-configured trigger condition is met, sending, by the first communication device, at least one of first processing resource information, target algorithm recommendation information, second interaction information, and second processing resource information, where the second interaction information is used to indicate sharing capability of a plurality of target algorithms for an embedded neural-network processing unit (Neural-network Processing Unit, NPU), and the second processing resource information is used to indicate resource information for the first communication device to run the target algorithm.

Optionally, the trigger condition includes at least one of the following:
a quantity of available resources for the first communication device is less than a preset quantity of resources;
available resources for the first communication device are unable to support operation of the indicated target algorithm;
the first communication device is unable to perform processing according to a manner indicated in the first processing resource information or the second interaction information;
available resources for the first communication device have changed, or a range of change in available resources has exceeded a specified threshold; and
the first communication device needs to run a plurality of target algorithms simultaneously.

Optionally, the first processing resource information or the second interaction information further includes at least one of the following:
whether at least two target algorithms are able to run simultaneously; the at least two target algorithms can belong to a same algorithm type or different algorithm types;
a combination of target algorithms that are able to run simultaneously;
a combination of target algorithms that are unable to run simultaneously;
running time of each target algorithm in a combination of target algorithms that run simultaneously;
running time corresponding to parallel running of at least two target algorithms by the first communication device; and
a priority of the target algorithm.

Optionally, the method of the embodiments of this application further includes:
obtaining, by the first communication device, update indication information from at least one target communication device, where the update indication information is used to indicate update of the information about the target algorithm; and
updating the information about the target algorithm based on the update indication information.

For example, the neural network model information is updated based on the update indication information.

In the embodiments of this application, the first communication device can interact with other communication devices about different combinations of processing resource information. The combinations of processing resource information can also be described as capability information combinations. For example, one processing resource information combination is suitable for high-performance scenarios, and another processing resource information combination is suitable for low-power scenarios. The first communication device can determine the current processing resource information combination based on its own status. The processing resource information combination can include at least one of the first processing resource information and the first interaction information.

Additionally, in the embodiments of this application, the first processing resource information, information about a target algorithm, first interaction information, second processing resource information, second interaction information, first indication information, second indication information, or update indication information can be sent through at least one of the following: radio resource control (Radio Resource Control, RRC) message, medium access control control element (Medium Access Control Control Element, MAC CE) message, uplink control information (Uplink Control Information, UCI), and non-access stratum (Non-Access Stratum, NAS) message.

In the embodiments of this application, the first communication device can be a terminal or a network node. Other communication devices apart from the first communication device can be core network nodes, such as network data analytics function (Network Data Analytics Function, NWDAF) nodes or neural network processing nodes. The other communication device can alternatively be a base station or a newly defined neural network processing node. The other communication device can alternatively be a combination of a plurality of network nodes. For example, the configuration information comes from a first network node, and the first communication device reports the first interaction information to the first network node or a second network node based on the configuration information. A third network node performs a second round of configuration for the first communication device, and the first communication device indicates the final model support information to the third network node or a fourth network node.

As shown in FIG. 3, the embodiments of this application provide another information interaction method, which includes the following steps.

Step 301: A second communication device sends information about a target algorithm to a first communication device, where the target algorithm includes at least one of a neural network algorithm, an artificial intelligence algorithm, and a machine learning algorithm.

The target algorithm can specifically include a training algorithm, an inference algorithm, or the like.

Optionally, the information about the target algorithm includes at least one of the following:
an activation function type required by the target algorithm;
an operation type required by the target algorithm;
an available resource conversion relationship used between different operations as required by the target algorithm;
supporting different specific operations or supercomputing operations within one timing unit as required by the target algorithm;
a combinational relationship between different specific operations as required by the target algorithm;
the number of operation executions supported within a first target time as required by the target algorithm, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required by the target algorithm to complete a specific operation for a specific target;
supercomputing information required by the target algorithm;
neural network model information required by the target algorithm;
a model size;
a quantized bit number of a target algorithm model;
the number of layers of the model;
a maximum number of neurons in each layer of the model;
running time of each neural network algorithm required by the target algorithm;
running time of a combination of a plurality of neural network algorithms as required by the target algorithm;
time needed for the target algorithm as required by the target algorithm;
a target parameter of the target algorithm as required by the target algorithm;
at least one expected time for running the target algorithm;
an input type of the target algorithm;
preprocessing information corresponding to the input information of the target algorithm;
different target parameters corresponding to neural network models under a same type of target algorithm; and
a neural network model library, where the neural network model library may include at least one neural network model.

Optionally, the target parameter includes at least one of the following:
activation function;
number of layers;
number of neurons;
number of neurons per layer;
connection relationship among neurons; and
running time of the target algorithm.

Step 302: The second communication device performs information interaction with a target communication device based on the information about the target algorithm, where the target communication device includes at least one of the first communication device and a third communication device.

In the embodiments of this application, the second communication device sends information about a target algorithm to the first communication device, where the target algorithm includes at least one of a neural network algorithm, an artificial intelligence algorithm, and a machine learning algorithm, and subsequently performs information interaction with the communication device based on the information about the target algorithm to determine the target algorithm to be used by the first communication device, such as the target neural network model to be used by the first communication device, thereby achieving the purpose of the neural network model used by the first communication device being a neural network model adapted to its resource capabilities.

Optionally, the method of the embodiments of this application further includes:
obtaining, by the second communication device, first interaction information sent by the target communication device, where the first interaction information includes at least one of first processing resource information and target algorithm recommendation information, and the first processing resource information is used to indicate resource information for the first communication device to run the target algorithm.

Optionally, the method of the embodiments of this application further includes:
sending first indication information; where
the first indication information includes at least one of the following:
   indication information of a running priority of the target algorithm;
   time from configuration to activation of a neural network model;
   time required for switching between at least two neural network models; and
   whether a corresponding operation is runnable during a switching process between at least two neural network models.

Optionally, the method of the embodiments of this application further includes:
sending second indication information, where the second indication information is used to indicate a target algorithm to be used by the first communication device.

Optionally, the method of the embodiments of this application further includes:
sending update indication information, where the update indication information is used to indicate update of configuration information of the target algorithm.

Optionally, the method of the embodiments of this application further includes:
obtaining from the target communication device at least one of second interaction information and second processing resource information, where the second interaction information is used to indicate NPU sharing capability of a plurality of target algorithms, and the second processing resource information is used to indicate resource information for the first communication device to run the target algorithm.

Optionally, the first processing resource information includes at least one of the following:
an activation function type supported by the first communication device;
an operation type supported by the first communication device;
an available resource conversion relationship used between different operations as supported by the first communication device;
whether the first communication device supports different specific operations or supercomputing operations within one timing unit;
a combinational relationship between different specific operations as supported by the first communication device;
the number of operation executions supported by the first communication device within a first target time, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required for the first communication device to complete a specific operation for a specific target;
supercomputing information supported by the first communication device;
neural network model information supported by the first communication device;
a model size;
a quantized bit number of a target algorithm model;
the number of layers of the model;
a maximum number of neurons in each layer of the model;
running time of each neural network algorithm;
running time of a combination of a plurality of neural network algorithms;
a target algorithm supported or not supported by the first communication device;
whether the first communication device supports the target algorithm according to a predefined timing;
time required by the first communication device to run the target algorithm;
expected time corresponding to running the target algorithm by the first communication device; and
a target parameter of the target algorithm supported by the first communication device.

Optionally, the target algorithm recommendation information includes at least one of the following:
recommendation information of the first communication device for target parameters of the target algorithm;
revision information of the first communication device for target parameters of the target algorithm; and
information about whether the first communication device supports the target algorithm.

Optionally, the first processing resource information or the second interaction information further includes at least one of the following:
whether at least two target algorithms are able to run simultaneously;
a combination of target algorithms that are able to run simultaneously;
a combination of target algorithms that are unable to run simultaneously;
running time of each target algorithm in a combination of target algorithms that run simultaneously;
running time corresponding to parallel running of at least two target algorithms by the first communication device; and
a priority of the target algorithm.

Optionally, the target parameter includes at least one of the following:
activation function;
number of layers;
number of neurons;
number of neurons per layer;
connection relationship among neurons; and
running time of the target algorithm.

In the embodiments of this application, the second communication device sends information about a target algorithm to the first communication device, where the target algorithm includes at least one of a neural network algorithm, an artificial intelligence algorithm, and a machine learning algorithm, and subsequently performs information interaction with the communication device based on the information about the target algorithm to determine the target algorithm to be used by the first communication device, such as the target neural network model to be used by the first communication device, thereby achieving the purpose of the neural network model used by the first communication device being a neural network model adapted to its resource capabilities.

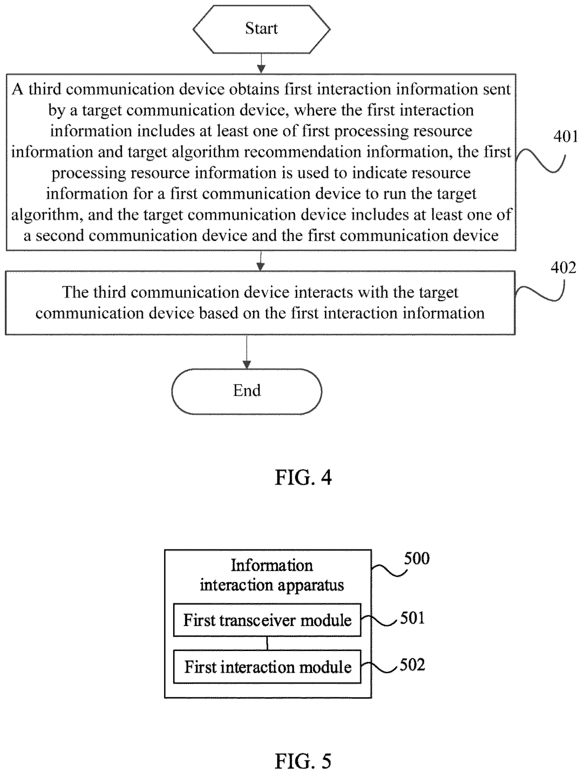

As shown in FIG. 4, the embodiments of this application provide another information interaction method, which includes the following steps.

Step 401: A third communication device obtains first interaction information sent by a target communication device, where the first interaction information includes at least one of first processing resource information and target algorithm recommendation information, the first processing resource information is used to indicate resource information for a first communication device to run the target algorithm, and the target communication device includes at least one of a second communication device and the first communication device.

The first interaction information has been described in detail in the method embodiments above and is not repeated here.

Step 402: The third communication device interacts with the target communication device based on the first interaction information.

Optionally, information involved in the interaction includes at least one of the following:
indication information of a running priority of the target algorithm;
time from configuration to activation of a neural network model;
time required for switching between at least two neural network models; and
whether a corresponding operation is runnable during a switching process between at least two neural network models;
update indication information, where the update indication information is used to indicate update of configuration information of the target algorithm; and
a target algorithm to be used by the first communication device.

In the method of the embodiments of this application, after obtaining the first interaction information, the third communication device provides feedback to the first communication device or other communication devices regarding the target algorithm to be used by the first communication device, the running priority indication information of the target algorithm, the time from configuration to activation of the neural network model, the time required for switching between at least two neural network models, and the like, enabling the first communication device to use a target algorithm that is adapted to its operational resources.

In a specific embodiment of this application, the second communication device sends information about a target algorithm to the first communication device, the first communication device sends first interaction information to the second communication device, and the second communication device indicates to the first communication device a target neural network model to be used by the first communication device. Alternatively, in another embodiment of this application, the second communication device sends information about a target algorithm to the first communication device, the first communication device sends first interaction information to both the second communication device and the third communication device, and the third communication device indicates the target neural network model to be used by the first communication device.

The information interaction method provided in the embodiments of this application can be executed by an information interaction apparatus. In embodiments of this application, the information interaction method being executed by the information interaction apparatus is used as an example to describe the information interaction apparatus according to the embodiments of this application.

As shown in FIG. 5, an embodiment of this application provides an information interaction apparatus 500, which includes:
a first transceiver module 501, configured to obtain information about a target algorithm, where the target algorithm includes at least one of a neural network algorithm, an artificial intelligence algorithm, and a machine learning algorithm; and
a first interaction module 502, configured to perform information interaction with at least one target communication device based on the information about the target algorithm.

Optionally, the information about the target algorithm is obtained according to a pre-agreed method, or the information about the target algorithm is configured by at least one of the communication devices.

Optionally, the first interaction module is configured to send first interaction information to the at least one communication device based on the information about the target algorithm, where the first interaction information includes at least one of first processing resource information and target algorithm recommendation information, and the first processing resource information is used to indicate resource information for the first communication device to run the target algorithm.

Optionally, the first interaction module is configured to obtain at least one of first indication information and second indication information from the at least one target communication device, where the second indication information is used to indicate a target algorithm to be used by the first communication device; and
the first indication information includes at least one of the following:
indication information of a running priority of the target algorithm;
time from configuration to activation of a neural network model;
time required for switching between at least two neural network models; and
whether a corresponding operation is runnable during a switching process between at least two neural network models.

Optionally, the first transceiver module is configured to obtain the information about the target algorithm based on at least one of first indication information and second indication information, where the second indication information is used to indicate a target algorithm to be used by the first communication device; and
the first indication information includes at least one of the following:
indication information of a running priority of the target algorithm;
time from configuration to activation of a neural network model;
time required for switching between at least two neural network models; and
whether a corresponding operation is runnable during a switching process between at least two neural network models.

Optionally, the first interaction information further includes at least one of the following:
indication information of a running priority of the target algorithm;
time from configuration to activation of a neural network model;
time required for switching between at least two neural network models; and
whether a corresponding operation is runnable during a switching process between at least two neural network models.

Optionally, the first processing resource information includes at least one of the following:
an activation function type supported by the first communication device;
an operation type supported by the first communication device;
an available resource conversion relationship used between different operations as supported by the first communication device;
whether the first communication device supports different specific operations or supercomputing operations within one timing unit;
a combinational relationship between different specific operations as supported by the first communication device;
the number of operation executions supported by the first communication device within a first target time, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required for the first communication device to complete a specific operation for a specific target;
supercomputing information supported by the first communication device;
neural network model information supported by the first communication device;
a model size;
a quantized bit number of a target algorithm model;
the number of layers of the model;
a maximum number of neurons in each layer of the model;
running time of each neural network algorithm;
running time of a combination of a plurality of neural network algorithms;
a target algorithm supported or not supported by the first communication device;
whether the first communication device supports the target algorithm according to a predefined timing;
time required by the first communication device to run the target algorithm;
expected time corresponding to running the target algorithm by the first communication device; and
a target parameter of the target algorithm supported by the first communication device.

Optionally, the information about the target algorithm includes at least one of the following:
an activation function type required by the target algorithm;
an operation type required by the target algorithm;
an available resource conversion relationship used between different operations as required by the target algorithm;
supporting different specific operations or supercomputing operations within one timing unit as required by the target algorithm;
a combinational relationship between different specific operations as required by the target algorithm;
the number of operation executions supported within a first target time as required by the target algorithm, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required by the target algorithm to complete a specific operation for a specific target;
supercomputing information required by the target algorithm;
neural network model information required by the target algorithm;
a model size;
a quantized bit number of a target algorithm model;
the number of layers of the model;
a maximum number of neurons in each layer of the model;
running time of each neural network algorithm required by the target algorithm;
running time of a combination of a plurality of neural network algorithms as required by the target algorithm;
time needed for the target algorithm as required by the target algorithm;
a target parameter of the target algorithm as required by the target algorithm;
at least one expected time for running the target algorithm;
an input type of the target algorithm;
preprocessing information corresponding to the input information of the target algorithm;
different target parameters corresponding to neural network models under a same type of target algorithm; and
a neural network model library.

Optionally, the number of operation executions supported by the first communication device within a first target time includes at least one of the following:
the number of operation executions for each type of operation executed within the first target time;
the number of operation executions for at least two types of operations that are executed simultaneously within the first target time; and
a total number of operation executions within the first target time.

Optionally, the timing unit is measured by a time unit, subcarrier spacing, slot, or frame.

Optionally, the target algorithm recommendation information includes at least one of the following:
recommendation information of the first communication device for target parameters of the target algorithm;
revision information of the first communication device for target parameters of the target algorithm; and
information about whether the first communication device supports the target algorithm.

Optionally, the first interaction module includes:
a first determining submodule, configured to determine a target algorithm to be used by the first communication device based on the information about the target algorithm; and
a first sending submodule, configured to send the target algorithm to be used by the first communication device to the at least one target communication device.

Optionally, the apparatus of the embodiments of this application further includes:
a third transceiver module, configured for the first communication device to send, in a case that a pre-configured trigger condition is met, at least one of first processing resource information, target algorithm recommendation information, second interaction information, and second processing resource information, where the second interaction information is used to indicate NPU sharing capability of a plurality of target algorithms, and the second processing resource information is used to indicate resource information for the first communication device to run the target algorithm.

Optionally, the trigger condition includes at least one of the following:
a quantity of available resources for the first communication device is less than a preset quantity of resources;
available resources for the first communication device are unable to support operation of the indicated target algorithm;
the first communication device is unable to perform processing according to a manner indicated in the first processing resource information or the second interaction information;
available resources for the first communication device have changed, or a range of change in available resources has exceeded a specified threshold; and
the first communication device needs to run a plurality of target algorithms simultaneously.

Optionally, the first processing resource information or the second interaction information further includes at least one of the following:
whether at least two target algorithms are able to run simultaneously;
a combination of target algorithms that are able to run simultaneously;
a combination of target algorithms that are unable to run simultaneously;
running time of each target algorithm in a combination of target algorithms that run simultaneously;
running time corresponding to parallel running of at least two target algorithms by the first communication device; and
a priority of the target algorithm.

Optionally, the apparatus of the embodiments of this application further includes:
a second obtaining module, configured for the first communication device to obtain update indication information from at least one target communication device, where the update indication information is used to indicate update of the information about the target algorithm; and
an update module, configured to update the information about the target algorithm based on the update indication information.

Optionally, the target parameter includes at least one of the following:
activation function;
number of layers;
number of neurons;
number of neurons per layer;
connection relationship among neurons; and
running time of the target algorithm.

The apparatus of the embodiments of this application obtains information about a target algorithm, where the target algorithm includes at least one of a neural network algorithm, an artificial intelligence algorithm, and a machine learning algorithm. The first communication device performs information interaction with at least one communication device based on the information about the target algorithm to determine the target algorithm to be used by the first communication device, such as the target neural network model to be used by the first communication device, thereby achieving the purpose of the neural network model used by the first communication device being a neural network model adapted to its resource capabilities.

The information interaction apparatus in the embodiments of this application may be an electronic device, for example, an electronic device having an operating system, or may be a component of an electronic device, for example, an integrated circuit or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The information interaction apparatus provided in the embodiments of this application can implement the processes implemented in the method embodiment of FIG. 2 with the same technical effects achieved. To avoid repetition, details are not described herein again.

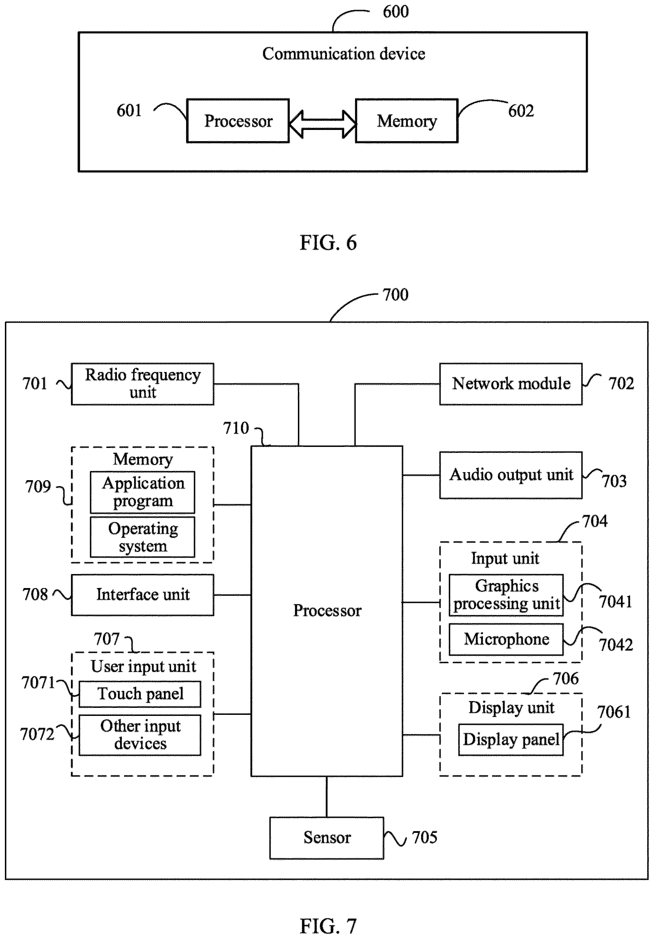

Optionally, as shown in FIG. 6, an embodiment of this application further provides a communication device 600 including a processor 601 and a memory 602, where the memory 602 stores a program or instructions capable of running on the processor 601. For example, in a case that the communication device 600 is a terminal, and when the program or instructions are executed by the processor 601, the processes of the foregoing embodiment of the information interaction method on the first communication device side are implemented, with the same technical effects achieved. In a case that the communication device 600 is a network-side device, when the program or instructions are executed by the processor 601, the processes of the foregoing embodiment of the information interaction method on the second or third communication device side are implemented, with the same technical effects achieved. To avoid repetition, details are not described herein again.

An embodiment of this application further provides a first communication device. This communication device is a terminal including a processor and a communication interface. The communication interface is configured to send first processing resource information. The processor is configured to obtain information about a target algorithm, where the target algorithm includes at least one of a neural network algorithm, an artificial intelligence algorithm, and a machine learning algorithm; and perform information interaction with at least one communication device based on the information about the target algorithm. This embodiment corresponds to the foregoing method embodiment on the first communication device side. All processes and implementations in the foregoing method embodiment are applicable to this embodiment, with the same technical effects achieved. Specifically, FIG. 7 is a schematic diagram of a hardware structure of a terminal implementing the embodiments of this application.

The terminal 700 includes but is not limited to at least part of these components: a radio frequency unit 701, a network module 702, an audio output unit 703, an input unit 704, a sensor 705, a display unit 706, a user input unit 707, an interface unit 708, a memory 709, a processor 710, and the like.

It can be understood by those skilled in the art that the terminal 700 may further include a power supply (for example, battery) supplying power to the components. The power supply may be logically connected to the processor 710 via a power management system so that functions such as charge management, discharge management, and power consumption management are implemented via the power management system. The structure of the terminal shown in FIG. 7 does not constitute any limitation on the terminal, and the terminal may include more or fewer components than shown in the figure, or combine some of the components, or have different arrangements of the components. Details are not described herein.

It should be understood that the input unit 704 may include a graphics processing unit (Graphics Processing Unit, GPU) 7041 and a microphone 7042. The graphics processing unit 7041 processes image data of still pictures or videos that are obtained by an image capture apparatus (for example, camera) in an image or video capture mode. The display unit 706 may include a display panel 7061. The display panel 7061 may be configured in the form of a liquid crystal display, an organic light-emitting diode display, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. Specifically, the other input devices 7072 may include but are not limited to a physical keyboard, a function button (for example, volume control button or on/off button), a trackball, a mouse, and a joystick. Details are not described herein.

In an embodiment of this application, the radio frequency unit 701 receives downlink data from a network-side device and transfers the data to the processor 710 for processing; and the radio frequency unit 701 can additionally send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing programs or instructions and a second storage area for storing data. The first storage area may store an operating system, an application program or instructions required by at least one function (for example, a sound playback function or an image playback function), and the like. Additionally, the memory 709 may be a volatile memory or a non-volatile memory or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 of the embodiments of this application includes but is not limited to these and any other applicable types of memories.

The processor 710 may include one or more processing units. Optionally, the processor 710 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated into the processor 710.

The radio frequency unit 701 is configured to obtain information about a target algorithm, where the target algorithm includes at least one of a neural network algorithm, an artificial intelligence algorithm, and a machine learning algorithm, and a machine learning algorithm; and perform information interaction with at least one communication device based on the information about the target algorithm.

Optionally, the information about the target algorithm is obtained according to a pre-agreed method, or the information about the target algorithm is configured by at least one of the communication devices.

Optionally, the radio frequency unit 701 is configured for the first communication device to send first interaction information to the at least one communication device based on the information about the target algorithm, where the first interaction information includes at least one of first processing resource information and target algorithm recommendation information, and the first processing resource information is used to indicate resource information for the first communication device to run the target algorithm.

Optionally, the radio frequency unit 701 is configured for the first communication device to obtain at least one of first indication information and second indication information from the at least one target communication device, where the second indication information is used to indicate a target algorithm to be used by the first communication device; and
the first indication information includes at least one of the following:
indication information of a running priority of the target algorithm;
time from configuration to activation of a neural network model;
time required for switching between at least two neural network models; and
whether a corresponding operation is runnable during a switching process between at least two neural network models.

Optionally, the radio frequency unit 701 is configured to obtain the information about the target algorithm based on at least one of first indication information and second indication information, where the second indication information is used to indicate a target algorithm to be used by the first communication device; and
the first indication information includes at least one of the following:
indication information of a running priority of the target algorithm;
time from configuration to activation of a neural network model;
time required for switching between at least two neural network models; and
whether a corresponding operation is runnable during a switching process between at least two neural network models.

Optionally, the first interaction information further includes at least one of the following:
indication information of a running priority of the target algorithm;
time from configuration to activation of a neural network model;
time required for switching between at least two neural network models; and
whether a corresponding operation is runnable during a switching process between at least two neural network models.

Optionally, the first processing resource information includes at least one of the following:
an activation function type supported by the first communication device;
an operation type supported by the first communication device;
an available resource conversion relationship used between different operations as supported by the first communication device;
whether the first communication device supports different specific operations or supercomputing operations within one timing unit;
a combinational relationship between different specific operations as supported by the first communication device;
the number of operation executions supported by the first communication device within a first target time, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required for the first communication device to complete a specific operation for a specific target;
supercomputing information supported by the first communication device;
neural network model information supported by the first communication device;
a model size;
a quantized bit number of a target algorithm model;
the number of layers of the model;
a maximum number of neurons in each layer of the model;
running time of each neural network algorithm;
running time of a combination of a plurality of neural network algorithms;
a target algorithm supported or not supported by the first communication device;
whether the first communication device supports the target algorithm according to a predefined timing;
time required by the first communication device to run the target algorithm;
expected time corresponding to running the target algorithm by the first communication device; and
a target parameter of the target algorithm supported by the first communication device.

Optionally, the information about the target algorithm includes at least one of the following:
an activation function type required by the target algorithm;
an operation type required by the target algorithm;
an available resource conversion relationship used between different operations as required by the target algorithm;
supporting different specific operations or supercomputing operations within one timing unit as required by the target algorithm;
a combinational relationship between different specific operations as required by the target algorithm;
the number of operation executions supported within a first target time as required by the target algorithm, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required by the target algorithm to complete a specific operation for a specific target;
supercomputing information required by the target algorithm;
neural network model information required by the target algorithm;
a model size;
a quantized bit number of a target algorithm model;
the number of layers of the model;
a maximum number of neurons in each layer of the model;
running time of each neural network algorithm required by the target algorithm;
running time of a combination of a plurality of neural network algorithms as required by the target algorithm;
time needed for the target algorithm as required by the target algorithm;
a target parameter of the target algorithm as required by the target algorithm;
at least one expected time for running the target algorithm;
an input type of the target algorithm;
preprocessing information corresponding to the input information of the target algorithm;
different target parameters corresponding to neural network models under a same type of target algorithm; and
a neural network model library.

Optionally, the number of operation executions supported by the first communication device within a first target time includes at least one of the following:
the number of operation executions for each type of operation executed within the first target time;
the number of operation executions for at least two types of operations that are executed simultaneously within the first target time; and
a total number of operation executions within the first target time.

Optionally, the timing unit is measured by a time unit, subcarrier spacing, slot, or frame.

Optionally, the target algorithm recommendation information includes at least one of the following:
recommendation information of the first communication device for target parameters of the target algorithm;
revision information of the first communication device for target parameters of the target algorithm; and
information about whether the first communication device supports the target algorithm.

Optionally, the radio frequency unit 701 is configured to determine a target algorithm to be used by the first communication device, and send the target algorithm to be used by the first communication device to the at least one target communication device.

Optionally, the radio frequency unit 701 is configured to send, in a case that a pre-configured trigger condition is met, at least one of first processing resource information, target algorithm recommendation information, second interaction information, and second processing resource information, where the second interaction information is used to indicate NPU sharing capability of a plurality of target algorithms, and the second processing resource information is used to indicate resource information for the first communication device to run the target algorithm.

Optionally, the trigger condition includes at least one of the following:
a quantity of available resources for the first communication device is less than a preset quantity of resources;
available resources for the first communication device are unable to support operation of the indicated target algorithm;
the first communication device is unable to perform processing according to a manner indicated in the first processing resource information or the second interaction information;
available resources for the first communication device have changed, or a range of change in available resources has exceeded a specified threshold; and
the first communication device needs to run a plurality of target algorithms simultaneously.

Optionally, the first processing resource information or the second interaction information further includes at least one of the following:
whether at least two target algorithms are able to run simultaneously;
a combination of target algorithms that are able to run simultaneously;
a combination of target algorithms that are unable to run simultaneously;
running time of each target algorithm in a combination of target algorithms that run simultaneously;
running time corresponding to parallel running of at least two target algorithms by the first communication device; and
a priority of the target algorithm.

Optionally, the radio frequency unit 701 is configured to obtain update indication information from at least one target communication device, where the update indication information is used to indicate update of the information about the target algorithm; and the processor 710 is configured to update the information about the target algorithm based on the update indication information.

Optionally, the target parameter includes at least one of the following:
activation function;
number of layers;
number of neurons;
number of neurons per layer;
connection relationship among neurons; and
running time of the target algorithm.

In this embodiment of this application, information about a target algorithm is obtained, where the target algorithm includes at least one of a neural network algorithm, an artificial intelligence algorithm, and a machine learning algorithm. The first communication device performs information interaction with at least one communication device based on the information about the target algorithm to determine the target algorithm to be used by the first communication device, such as the target neural network model to be used by the first communication device, thereby achieving the purpose of the neural network model used by the first communication device being a neural network model adapted to its resource capabilities.

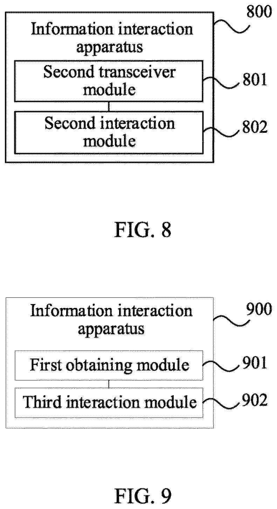

As shown in FIG. 8, an embodiment of this application provides an information interaction apparatus 800, which includes:
a second transceiver module 801, configured to send information about a target algorithm, where the target algorithm includes at least one of a neural network algorithm, an artificial intelligence algorithm, and a machine learning algorithm, and a machine learning algorithm; and
a second interaction module 802, configured to perform information interaction with at least one communication device based on the information about the target algorithm.

Optionally, the apparatus in this embodiment of this application further includes:
a third obtaining module, configured to obtain first interaction information sent by a target communication device, where the first interaction information includes at least one of first processing resource information and target algorithm recommendation information, and the first processing resource information is used to indicate resource information for the first communication device to run the target algorithm.

Optionally, the apparatus in this embodiment of this application further includes:
a fourth transceiver module, configured to send first indication information; where
the first indication information includes at least one of the following:
   indication information of a running priority of the target algorithm;
   time from configuration to activation of a neural network model;
   time required for switching between at least two neural network models; and
   whether a corresponding operation is runnable during a switching process between at least two neural network models.

Optionally, the apparatus in this embodiment of this application further includes:
a fifth transceiver module, configured to send second indication information, where the second indication information is used to indicate a target algorithm to be used by the first communication device.

Optionally, the apparatus in this embodiment of this application further includes:
a sixth transceiver module, configured to send update indication information, where the update indication information is used to indicate update of configuration information of the target algorithm.

Optionally, the apparatus in this embodiment of this application further includes:
a fourth obtaining module, configured to obtain from the target communication device at least one of second interaction information and second processing resource information, where the second interaction information is used to indicate NPU sharing capability of a plurality of target algorithms, and the second processing resource information is used to indicate resource information for the first communication device to run the target algorithm.

Optionally, the information about the target algorithm includes at least one of the following:
an activation function type required by the target algorithm;
an operation type required by the target algorithm;
an available resource conversion relationship used between different operations as required by the target algorithm;
supporting different specific operations or supercomputing operations within one timing unit as required by the target algorithm;
a combinational relationship between different specific operations as required by the target algorithm;
the number of operation executions supported within a first target time as required by the target algorithm, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required by the target algorithm to complete a specific operation for a specific target;
supercomputing information required by the target algorithm;
neural network model information required by the target algorithm;
a model size;
a quantized bit number of a target algorithm model;
the number of layers of the model;
a maximum number of neurons in each layer of the model;
running time of each neural network algorithm required by the target algorithm;
running time of a combination of a plurality of neural network algorithms as required by the target algorithm;
time needed for the target algorithm as required by the target algorithm;
a target parameter of the target algorithm as required by the target algorithm;
at least one expected time for running the target algorithm;
an input type of the target algorithm;
preprocessing information corresponding to the input information of the target algorithm;
different target parameters corresponding to neural network models under a same type of target algorithm; and
a neural network model library.

Optionally, the first processing resource information includes at least one of the following:
an activation function type supported by the first communication device;
an operation type supported by the first communication device;
an available resource conversion relationship used between different operations as supported by the first communication device;
whether the first communication device supports different specific operations or supercomputing operations within one timing unit;
a combinational relationship between different specific operations as supported by the first communication device;
the number of operation executions supported by the first communication device within a first target time, where the first target time includes at least one timing unit;
a relationship between the number of operation executions supported within the first target time and the number of operation executions supported within a second target time, where the second target time includes at least one timing unit, and the timing unit(s) contained in the second target time are different from the timing unit(s) contained in the first target time;
time required for the first communication device to complete a specific operation for a specific target;
supercomputing information supported by the first communication device;
neural network model information supported by the first communication device;
a model size;
a quantized bit number of a target algorithm model;
the number of layers of the model;
a maximum number of neurons in each layer of the model;
running time of each neural network algorithm;
running time of a combination of a plurality of neural network algorithms;
a target algorithm supported or not supported by the first communication device;
whether the first communication device supports the target algorithm according to a predefined timing;
time required by the first communication device to run the target algorithm;
expected time corresponding to running the target algorithm by the first communication device; and
a target parameter of the target algorithm supported by the first communication device.

Optionally, the target algorithm recommendation information includes at least one of the following:
recommendation information of the first communication device for target parameters of the target algorithm;
revision information of the first communication device for target parameters of the target algorithm; and
information about whether the first communication device supports the target algorithm.

Optionally, the first processing resource information or the second interaction information further includes at least one of the following:
whether at least two target algorithms are able to run simultaneously;
a combination of target algorithms that are able to run simultaneously;
a combination of target algorithms that are unable to run simultaneously;
running time of each target algorithm in a combination of target algorithms that run simultaneously;
running time corresponding to parallel running of at least two target algorithms by the first communication device; and
a priority of the target algorithm.

Optionally, the target parameter includes at least one of the following:
activation function;
number of layers;
number of neurons;
number of neurons per layer;
connection relationship among neurons; and
running time of the target algorithm.

The apparatus in this embodiment of this application sends information about a target algorithm to the first communication device, where the target algorithm includes at least one of a neural network algorithm, an artificial intelligence algorithm, and a machine learning algorithm, and subsequently performs information interaction with the communication device based on the information about the target algorithm to determine the target algorithm to be used by the first communication device, such as the target neural network model to be used by the first communication device, thereby achieving the purpose of the neural network model used by the first communication device being a neural network model adapted to its resource capabilities.

As shown in FIG. 9, an embodiment of this application provides an information interaction apparatus 900, which includes:
a first obtaining module 901, configured to obtain first interaction information sent by a target communication device, where the first interaction information includes at least one of first processing resource information and target algorithm recommendation information, the first processing resource information is used to indicate resource information for a first communication device to run the target algorithm, and the target communication device includes at least one of a second communication device and the first communication device; and
a third interaction module 902, configured to interact with the target communication device based on the first interaction information.

Optionally, the information involved in the interaction with the target communication includes at least one of the following:
indication information of a running priority of the target algorithm;
time from configuration to activation of a neural network model;
time required for switching between at least two neural network models; and
whether a corresponding operation is runnable during a switching process between at least two neural network models;
update indication information, where the update indication information is used to indicate update of configuration information of the target algorithm; and
a target algorithm to be used by the first communication device.

The information interaction apparatus of this embodiment of this application, after obtaining the first interaction information, provides feedback to the first communication device or other communication devices regarding the target algorithm to be used by the first communication device, the running priority indication information of the target algorithm, the time from configuration to activation of the neural network model, the time required for switching between at least two neural network models, and the like, enabling the first communication device to use a target algorithm that is adapted to its operational resources.

An embodiment of this application further provides a second communication device. The second communication device is a network-side device including a processor and a communication interface. The communication interface is configured to send information about a target algorithm to a first communication device, where the target algorithm includes at least one of a neural network algorithm, an artificial intelligence algorithm, and a machine learning algorithm; and perform information interaction with a target communication device based on the information about the target algorithm, where the target communication device includes at least one of the first communication device and a third communication device. This network-side device embodiment corresponds to the foregoing method embodiment on the second communication device side. All processes and implementations in the foregoing method embodiment on the second communication device side are applicable to this network-side device embodiment, with the same technical effect achieved.

An embodiment of this application further provides a third communication device. The third communication device is specifically a network-side device including a processor and a communication interface. The communication interface is configured to obtain first interaction information sent by a target communication device, where the first interaction information includes at least one of first processing resource information and target algorithm recommendation information, the first processing resource information is used to indicate resource information for a first communication device to run the target algorithm, and the target communication device includes at least one of a second communication device and the first communication device; and interact with the target communication device based on the first interaction information. This network-side device embodiment corresponds to the foregoing method embodiment on the third communication device side. All processes and implementations in the foregoing method embodiment on the third communication device side are applicable to this network-side device embodiment, with the same technical effect achieved.

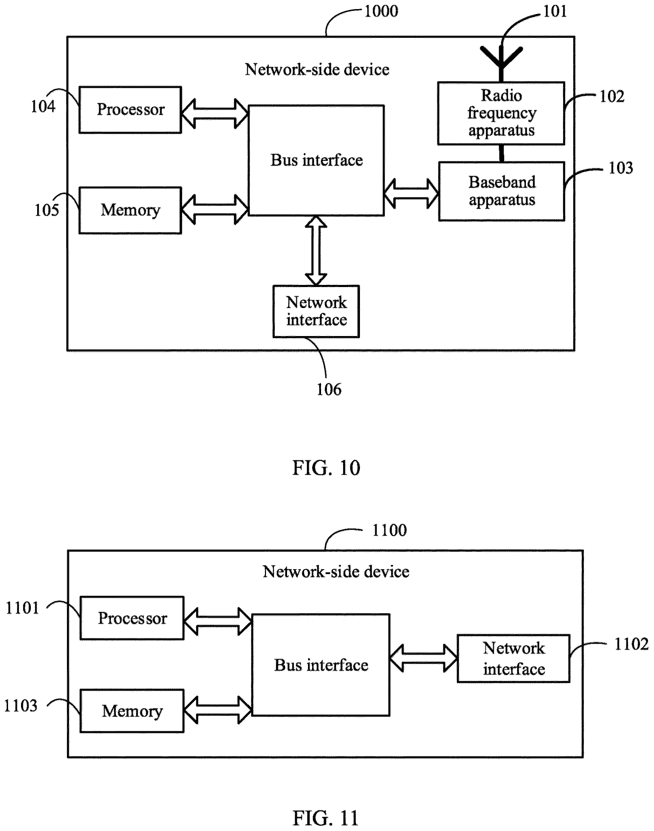

Specifically, an embodiment of this application further provides a network-side device. The network-side device is specifically a second communication device or a third communication device. As shown in FIG. 10, the network-side device 1000 includes an antenna 101, a radio frequency apparatus 102, a baseband apparatus 103, a processor 104, and memory 105. The antenna 101 is connected to the radio frequency apparatus 102. Uplink, the radio frequency apparatus 102 receives information through the antenna 101, and sends the received information to the baseband apparatus 103 for processing. Downlink, the baseband apparatus 103 processes to-be-sent information, and sends the information to the radio frequency apparatus 102; and the radio frequency apparatus 102 processes the received information and then sends the information out through the antenna 101.

The method executed by the second or third communication device in the aforesaid embodiments may be implemented on the baseband apparatus 103. The baseband apparatus 103 includes a baseband processor.

The baseband apparatus 103 may include, for example, at least one baseband processing unit, where multiple chips are disposed on the baseband processing unit, as shown in FIG. 10, one of the chips being, for example, the processor. The baseband processing unit is connected to the memory 105 through a bus interface, to invoke a program in the memory 105 to perform the operations of the second or third communication device as described in the foregoing method embodiments.

The network-side device further includes a network interface 106, where the interface is, for example, a common public radio interface (Common Public Radio Interface, CPRI).

Specifically, the network-side device 1000 in this embodiment of the present invention further includes an instruction or program stored in the memory 105 and executable on the processor 104. The processor 104 invokes the instruction or program in the memory 105 to execute the method executed by the modules shown in FIG. 8 or 9, with the same technical effects achieved. To avoid repetition, details are not described herein again.

Specifically, an embodiment of this application further provides a network-side device. The network-side device is specifically a second communication device or a third communication device. As shown in FIG. 11, the network-side device 1100 includes a processor 1101, a network interface 1102, and memory 1103. The network interface 1102 is, for example, a common public radio interface (Common Public Radio Interface, CPRI).

Specifically, the network-side device 1100 in this embodiment of the present invention further includes an instruction or program stored in the memory 1103 and executable on the processor 1101. The processor 1101 invokes the instruction or program in the memory 1103 to execute the method executed by the modules shown in FIG. 8 or 9, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing information interaction method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

Another embodiment of this application provides a chip, where the chip includes a processor and a communication interface, the communication interface is coupled to the processor, and the processor is configured to run a program or instructions to implement the processes of the foregoing information interaction method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program or program product, where the computer program or program product is stored in a storage medium, and the computer program product is executed by at least one processor to implement the processes of the foregoing information interaction method embodiments, with the same technical effects achieved. To avoid repetition, details are not described herein again.

An embodiment of this application further provides an information interaction system including a terminal and a network-side device. The terminal is configured to execute the steps of the information interaction method executed by the first communication device, and the network-side device is configured to execute the steps of the information interaction method executed by the second communication device.

An embodiment of this application further provides a communication device configured to execute the processes of the foregoing information interaction method embodiments, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in the form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from the principles of this application and the protection scope of the claims, and all such manners fall within the protection scope of this application.

## Claims

1. An information interaction method, comprising:
obtaining, by a first communication device, information about a target algorithm, wherein the target algorithm comprises at least one of a neural network algorithm, an artificial intelligence algorithm, and a machine learning algorithm; and
performing, by the first communication device, information interaction with at least one target communication device based on the information about the target algorithm.

2. The method according to claim 1, wherein the information about the target algorithm is obtained according to a pre-agreed method, or the information about the target algorithm is configured by at least one of the communication devices.

3. The method according to claim 1, wherein the performing, by the first communication device, information interaction with at least one target communication device comprises:
sending, by the first communication device, first interaction information to the at least one communication device based on the information about the target algorithm, wherein the first interaction information comprises at least one of first processing resource information and target algorithm recommendation information, and the first processing resource information is used to indicate resource information for the first communication device to run the target algorithm.

4. The method according to claim 1, wherein the performing, by the first communication device, information interaction with at least one target communication device comprises:
obtaining, by the first communication device, at least one of first indication information and second indication information from the at least one target communication device, wherein the second indication information is used to indicate a target algorithm to be used by the first communication device; and
the first indication information comprises at least one of the following:
indication information of a running priority of the target algorithm;
time from configuration to activation of a neural network model;
time required for switching between at least two neural network models; and
whether a corresponding operation is runnable during a switching process between at least two neural network models.

5. The method according to claim 1 or 2, wherein the obtaining, by a first communication device, information about a target algorithm comprises:
obtaining the information about the target algorithm based on at least one of first indication information and second indication information, wherein the second indication information is used to indicate a target algorithm to be used by the first communication device; and
the first indication information comprises at least one of the following:
indication information of a running priority of the target algorithm;
time from configuration to activation of a neural network model;
time required for switching between at least two neural network models; and
whether a corresponding operation is runnable during a switching process between at least two neural network models.

6. The method according to claim 3, wherein the first interaction information comprises at least one of the following:
indication information of a running priority of the target algorithm;
time from configuration to activation of a neural network model;
time required for switching between at least two neural network models; and
whether a corresponding operation is runnable during a switching process between at least two neural network models.

7. The method according to 3, wherein the first processing resource information comprises at least one of the following:
an activation function type supported by the first communication device;
an operation type supported by the first communication device;
an available resource conversion relationship used between different operations as supported by the first communication device;
whether the first communication device supports different specific operations or supercomputing operations within one timing unit;
a combinational relationship between different specific operations as supported by the first communication device;
the number of operation executions supported by the first communication device within a first target time, wherein the first target time comprises at least one timing unit;
a relationship between the number of operation executions supported within the first target time and the number of operation executions supported within a second target time, wherein the second target time comprises at least one timing unit, and the timing unit contained in the second target time are different from the timing unit contained in the first target time;
time required for the first communication device to complete a specific operation for a specific target;
supercomputing information supported by the first communication device;
neural network model information supported by the first communication device;
a model size;
a quantized bit number of a target algorithm model;
the number of layers of the model;
a maximum number of neurons in each layer of the model;
running time of each neural network algorithm;
running time of a combination of a plurality of neural network algorithms;
a target algorithm supported or not supported by the first communication device;
whether the first communication device supports the target algorithm according to a predefined timing;
time required by the first communication device to run the target algorithm;
expected time corresponding to running the target algorithm by the first communication device; and
a target parameter of the target algorithm supported by the first communication device.

8. The method according to claim 1, wherein the information about the target algorithm comprises at least one of the following:
an activation function type required by the target algorithm;
an operation type required by the target algorithm;
an available resource conversion relationship used between different operations as required by the target algorithm;
supporting different specific operations or supercomputing operations within one timing unit as required by the target algorithm;
a combinational relationship between different specific operations as required by the target algorithm;
the number of operation executions supported within a first target time as required by the target algorithm, wherein the first target time comprises at least one timing unit;
a relationship between the number of operation executions supported within the first target time and the number of operation executions supported within a second target time, wherein the second target time comprises at least one timing unit, and the timing unit(s) contained in the second target time are different from the timing unit(s) contained in the first target time;
time required by the target algorithm to complete a specific operation for a specific target;
supercomputing information required by the target algorithm;
neural network model information required by the target algorithm;
a model size;
a quantized bit number of a target algorithm model;
the number of layers of the model;
a maximum number of neurons in each layer of the model;
running time of each neural network algorithm as required by the target algorithm;
running time of a combination of a plurality of neural network algorithms as required by the target algorithm;
time needed for the target algorithm as required by the target algorithm;
a target parameter of the target algorithm as required by the target algorithm;
at least one expected time for running the target algorithm;
an input type of the target algorithm;
preprocessing information corresponding to the input information of the target algorithm;
different target parameters corresponding to neural network models under a same type of target algorithm; and
a neural network model library.

9. The method according to claim 7 or 8, wherein the number of operation executions supported by the first communication device within a first target time comprises at least one of the following:
the number of operation executions for each type of operation executed within the first target time;
the number of operation executions for at least two types of operations that are executed simultaneously within the first target time; and
a total number of operation executions within the first target time.

10. The method according to claim 7 or 8, wherein the timing unit is measured by a time unit, subcarrier spacing, slot, or frame.

11. The method according to claim 3, wherein the target algorithm recommendation information comprises at least one of the following:
recommendation information of the first communication device for target parameters of the target algorithm;
revision information of the first communication device for target parameters of the target algorithm; and
information about whether the first communication device supports the target algorithm.

12. The method according to claim 1, wherein the performing, by the first communication device, information interaction with at least one target communication device comprises:
determining a target algorithm to be used by the first communication device based on the information about the target algorithm; and
sending the target algorithm to be used by the first communication device to the at least one target communication device.

13. The method according to claim 1 or 3, further comprising:
in a case that a pre-configured trigger condition is met, sending, by the first communication device, at least one of first processing resource information, target algorithm recommendation information, second interaction information, and second processing resource information, wherein the second interaction information is used to indicate NPU sharing capability of a plurality of target algorithms, and the second processing resource information is used to indicate resource information for the first communication device to run the target algorithm.

14. The method according to claim 13, wherein the trigger condition comprises at least one of the following:
a quantity of available resources for the first communication device is less than a preset quantity of resources;
available resources for the first communication device are unable to support operation of the indicated target algorithm;
the first communication device is unable to perform processing according to a manner indicated in the first processing resource information or the second interaction information;
available resources for the first communication device have changed, or a range of change in available resources has exceeded a specified threshold; and
the first communication device needs to run a plurality of target algorithms simultaneously.

15. The method according to claim 3 or 13, wherein the first processing resource information or the second interaction information further comprises at least one of the following:
whether at least two target algorithms are able to run simultaneously;
a combination of target algorithms that are able to run simultaneously;
a combination of target algorithms that are unable to run simultaneously;
running time of each target algorithm in a combination of target algorithms that run simultaneously;
running time corresponding to parallel running of at least two target algorithms by the first communication device; and
a priority of the target algorithm.

16. The method according to claim 1, further comprising:
obtaining, by the first communication device, update indication information from at least one target communication device, wherein the update indication information is used to indicate update of the information about the target algorithm; and
update the information about the target algorithm based on the update indication information.

17. The method according to claim 7 or 11, wherein the target parameter comprises at least one of the following:
activation function;
number of layers;
number of neurons;
number of neurons per layer;
connection relationship among neurons; and
running time of the target algorithm.

18. An information interaction method, comprising:
sending, by a second communication device, information about a target algorithm to a first communication device, wherein the target algorithm comprises at least one of a neural network algorithm, an artificial intelligence algorithm, and a machine learning algorithm; and
performing, by the second communication device, information interaction with a target communication device based on the information about the target algorithm, wherein the target communication device comprises at least one of the first communication device and a third communication device.

19. The method according to claim 18, further comprising:
obtaining, by the second communication device, first interaction information sent by the target communication device, wherein the first interaction information comprises at least one of first processing resource information and target algorithm recommendation information, and the first processing resource information is used to indicate resource information for the first communication device to run the target algorithm.

20. The method according to claim 18, further comprising:
sending first indication information; wherein
the first indication information comprises at least one of the following:
indication information of a running priority of the target algorithm;
time from configuration to activation of a neural network model;
time required for switching between at least two neural network models; and
whether a corresponding operation is runnable during a switching process between at least two neural network models.

21. The method according to claim 18 or 19, further comprising:
sending second indication information, wherein the second indication information is used to indicate a target algorithm to be used by the first communication device.

22. The method according to claim 18 or 19, further comprising:
sending update indication information, wherein the update indication information is used to indicate update of configuration information of the target algorithm information.

23. The method according to claim 18 or 19, further comprising:
obtaining from the target communication device at least one of second interaction information and second processing resource information, wherein the second interaction information is used to indicate NPU sharing capability of a plurality of target algorithms, and the second processing resource information is used to indicate resource information for the first communication device to run the target algorithm.

24. The method according to claim 18, wherein the information about the target algorithm comprises at least one of the following:
an activation function type required by the target algorithm;
an operation type required by the target algorithm;
an available resource conversion relationship used between different operations as required by the target algorithm;
supporting different specific operations or supercomputing operations within one timing unit as required by the target algorithm;
a combinational relationship between different specific operations as required by the target algorithm;
the number of operation executions supported within a first target time as required by the target algorithm, wherein the first target time comprises at least one timing unit;
a relationship between the number of operation executions supported within the first target time and the number of operation executions supported within a second target time, wherein the second target time comprises at least one timing unit, and the timing unit(s) contained in the second target time are different from the timing unit(s) contained in the first target time;
time required by the target algorithm to complete a specific operation for a specific target;
supercomputing information required by the target algorithm;
neural network model information required by the target algorithm;
a model size;
a quantized bit number of a target algorithm model;
the number of layers of the model;
a maximum number of neurons in each layer of the model;
running time of each neural network algorithm required by the target algorithm;
running time of a combination of a plurality of neural network algorithms as required by the target algorithm;
time needed for the target algorithm as required by the target algorithm;
a target parameter of the target algorithm as required by the target algorithm;
at least one expected time for running the target algorithm;
an input type of the target algorithm;
preprocessing information corresponding to the input information of the target algorithm;
different target parameters corresponding to neural network models under a same type of target algorithm; and
a neural network model library.

25. The method according to 19, wherein the first processing resource information comprises at least one of the following:
an activation function type supported by the first communication device;
an operation type supported by the first communication device;
an available resource conversion relationship used between different operations as supported by the first communication device;
whether the first communication device supports different specific operations or supercomputing operations within one timing unit;
a combinational relationship between different specific operations as supported by the first communication device;
the number of operation executions supported by the first communication device within a first target time, wherein the first target time comprises at least one timing unit;
a relationship between the number of operation executions supported within the first target time and the number of operation executions supported within a second target time, wherein the second target time comprises at least one timing unit, and the timing unit(s) contained in the second target time are different from the timing unit(s) contained in the first target time;
time required for the first communication device to complete a specific operation for a specific target;
supercomputing information supported by the first communication device;
neural network model information supported by the first communication device;
a model size;
a quantized bit number of a target algorithm model;
the number of layers of the model;
a maximum number of neurons in each layer of the model;
running time of each neural network algorithm;
running time of a combination of a plurality of neural network algorithms;
a target algorithm supported or not supported by the first communication device;
whether the first communication device supports the target algorithm according to a predefined timing;
time required by the first communication device to run the target algorithm;
expected time corresponding to running the target algorithm by the first communication device; and
a target parameter of the target algorithm supported by the first communication device.

26. The method according to claim 19, wherein the target algorithm recommendation information comprises at least one of the following:
recommendation information of the first communication device for target parameters of the target algorithm;
revision information of the first communication device for target parameters of the target algorithm; and
information about whether the first communication device supports the target algorithm.

27. The method according to claim 19 or 23, wherein the first processing resource information or the second interaction information further comprises at least one of the following:
whether at least two target algorithms are able to run simultaneously;
a combination of target algorithms that are able to run simultaneously;
a combination of target algorithms that are unable to run simultaneously;
running time of each target algorithm in a combination of target algorithms that run simultaneously;
running time corresponding to parallel running of at least two target algorithms by the first communication device; and
a priority of the target algorithm.

28. The method according to any one of claims 24 to 26, wherein the target parameter comprises at least one of the following:
activation function;
number of layers;
number of neurons;
number of neurons per layer;
connection relationship among neurons; and
running time of the target algorithm.

29. An information interaction method, comprising:
obtaining, by a third communication device, first interaction information sent by a target communication device, wherein the first interaction information comprises at least one of first processing resource information and target algorithm recommendation information, the first processing resource information is used to indicate resource information for a first communication device to run the target algorithm, and the target communication device comprises at least one of a second communication device and the first communication device; and
interacting, by the third communication device, with the target communication device based on the first interaction information.

30. The method according to claim 29, wherein information involved in the interaction of the third communication device with the target communication device comprises at least one of the following:
indication information of a running priority of the target algorithm;
time from configuration to activation of a neural network model;
time required for switching between at least two neural network models;
whether a corresponding operation is runnable during a switching process between at least two neural network models;
update indication information, wherein the update indication information is used to indicate update of configuration information of target algorithm; and
a target algorithm to be used by the first communication device.

31. An information interaction apparatus, comprising:
a first transceiver module, configured to obtain information about a target algorithm, wherein the target algorithm comprises at least one of a neural network algorithm, an artificial intelligence algorithm, and a machine learning algorithm; and
a first interaction module, configured to perform information interaction with at least one target communication device based on the information about the target algorithm.

32. An information interaction apparatus, comprising:
a second transceiver module, configured to send information about a target algorithm to a first communication device, wherein the target algorithm comprises at least one of a neural network algorithm, an artificial intelligence algorithm, and a machine learning algorithm; and
a second interaction module, configured to perform information interaction with a target communication device based on the information about the target algorithm, wherein the target communication device comprises at least one of the first communication device and a third communication device.

33. An information interaction apparatus, comprising:
a first obtaining module, configured to obtain first interaction information sent by a target communication device, wherein the first interaction information comprises at least one of first processing resource information and target algorithm recommendation information, the first processing resource information is used to indicate resource information for a first communication device to run the target algorithm, and the target communication device comprises at least one of a second communication device and the first communication device; and
a third interaction module, configured to interact with the target communication device based on the first interaction information.

34. A communication device, comprising a processor and a memory, wherein the memory stores a program or instructions capable of running on the processor, and when the program or instructions are executed by the processor, the steps of the information interaction method according to any one of claims 1 to 17 are implemented, or the steps of the information interaction method according to any one of claims 18 to 28 are implemented, or the steps of the information interaction method according to any one of claims 29 to 30 are implemented.

35. A readable storage medium, wherein the readable storage medium stores a program or instructions, and when the program or the instructions are executed by a processor, the steps of the information interaction method according to any one of claims 1 to 17 are implemented, or the steps of the information interaction method according to any one of claims 18 to 28 are implemented, or the steps of the information interaction method according to any one of claims 29 to 30 are implemented.
